# FASCICULE DE BREVET EUROPEEN

(11) **EP 2 734 415 B1**
(45) Date de publication et mention de la délivrance du brevet: **24.03.2021**
(21) Numéro de dépôt: 12737270.4
(22) Date de dépôt: 16.07.2012
(51) Int. Cl.: B60Q 1/14, B60S 1/08

(54) **PROCEDE DE CONTROLE D'UN ORGANE FONCTIONNEL DE VEHICULE ET UNITE FONCTIONNELLE DE VEHICULE**
VERFAHREN ZUR STEUERUNG EINES FUNKTIONSTEILS EINES FAHRZEUGS UND FUNKTIONSEINHEIT EINES FAHRZEUGS
METHOD OF CONTROLLING A FUNCTIONAL MEMBER OF A VEHICLE AND FUNCTIONAL UNIT OF A VEHICLE

(30) Priorité: 21.07.2011 FR 1156616
(43) Date de publication de la demande: 28.05.2014
(73) Titulaire: Valeo Vision, 93012 Bobigny Cedex (FR)
(72) Inventeur: REISS, Benoît, F-95580 Margency (FR)
(86) Numéro de dépôt international: PCT/EP2012/063905
(87) Numéro de publication internationale: WO 2013/010989

(56) Documents cités:
- EP-A1- 1 538 024
- EP-A1- 1 674 356
- EP-A1- 2 244 007
- WO-A1-2006/015905
- BE-A- 706 393
- DE-A1-102007 058 637
- US-A1- 2006 039 158

## Description

L'invention concerne un procédé de contrôle d'un organe fonctionnel d'un véhicule automobile, par exemple le dispositif projecteur ou bien le dispositif d'essuie-glace.

Les projecteurs de véhicules, ou phares, ont généralement une pluralité de modes de fonctionnement, parmi lesquels on retrouve le plus souvent :
- les feux de positions, d'intensité et portée faible qui s'utilisent essentiellement à l'arrêt,
- les feux de croisement, ou « codes », d'intensité forte mais à portée limitée (environ 80 mètres), étudiés pour permettre le croisement d'un véhicule sans en éblouir le conducteur,
- les feux de route, ou « pleins phares », d'intensité forte et à porte maximale (environ 600 mètres), qui doivent être éteints lors des croisements de véhicules du fait de leur caractère éblouissant.

Il est connu d'utiliser des projecteurs dits bifonction, qui peuvent basculer entre les modes feux de croisements et feux de route. Ces projecteurs basculent d'un mode à l'autre par exemple par utilisation d'un cache et/ou d'une adaptation de l'alimentation. Dans le cas des projecteurs à diodes électroluminescentes DEL multiples, le passage d'un mode à l'autre se fait par extinction ou alimentation sélective d'un certain nombres des diodes.

Lors d'un dépassement du véhicule par un second, le dispositif de projecteurs est censé basculer du mode feux de route au mode au mode feux de croisement, ou du moins à adapter d'une quelconque manière le fonctionnement, avant que le second véhicule ne se rabatte, toujours afin d'éviter l'éblouissement du conducteur.

Ce basculement est majoritairement effectué manuellement, mais de plus en plus de véhicules comportent un dispositif de basculement automatique, en particulier au moyen d'un capteur dirigé vers l'avant du véhicule.

Il est connu d'utiliser des détecteurs orientés vers l'avant du véhicule, de type optique, radar ou lidar, afin de détecter le véhicule dépassant lorsqu'il se rabat devant le véhicule et entre donc dans le faisceau des feux de route. Il s'ensuit un basculement nécessairement rapide vers le mode de fonctionnement feux de croisement.

Ce basculement rapide crée un effet ressenti dit de « trou noir », correspondant au temps entre la baisse de luminosité et l'adaptation de la vision du conducteur à ladite baisse de luminosité. Durant le temps d'adaptation de la vision du conducteur, sa vision est diminuée, ce qui présente un risque important, surtout que ce laps de temps correspond exactement à celui où le véhicule en dépassement se rabat juste devant le premier véhicule.

Un autre problème rencontré lors des dépassements est la perte de visibilité déclenchée par les éclaboussures sur le pare-brise dues à l'eau soulevée par le véhicule dépassant. Il faut alors que le conducteur bascule en haute vitesse de balayage des essuie-glace pour récupérer la visibilité. Durant le laps de temps où la visibilité est diminuée le risque d'accident est accru

Le documents DE 10 2007 058 637 A1, BE 706393 et US 2006/0039158 A1 montrent des projecteurs de véhicules pouvant basculer du mode feux de route au mode feux de croisement lors d'un dépassement du véhicule par un second.

Afin de pallier au moins partiellement les défauts précédemment mentionnés, l'invention propose un procédé de contrôle d'au moins un organe fonctionnel d'un véhicule automobile, ledit au moins un organe fonctionnel pouvant fonctionner selon un mode de route adapté à la circulation en l'absence de véhicule dépassant, et un mode de croisement, adapté à la présence d'un véhicule dépassant, le procédé comportant les étapes :
- on détecte un véhicule dépassant dans une zone latérale arrière,
- on bascule du mode de fonctionnement de route au mode de fonctionnement de croisement lorsqu'un véhicule dépassant est détecté dans la zone latérale arrière,
le au moins un organe fonctionnel comportant un dispositif de projecteurs du véhicule, le mode de route étant le mode feux de route, et le mode de croisement le mode feux de croisement, et le basculement du mode feux de route au mode feux de croisement lorsqu'un véhicule dépassant est détecté dans la zone latérale arrière étant fait de manière progressive, la zone latérale arrière comportant un angle mort du véhicule, caractérisé en ce que l'on bascule du mode de fonctionnement de route au mode de fonctionnement de croisement lorsque le véhicule dépassant se présente dans l'angle mort du véhicule.

Le procédé de contrôle permet de basculer du mode route au mode de croisement plus tôt dans le déroulement du dépassement. Dès lors le ressenti de « trou noir » a lieu avant que le véhicule dépassant ne se rabatte.

Le procédé peut en outre présenter une ou plusieurs des caractéristiques suivantes, prises seules ou en combinaison.

Il peut comporter une étape supplémentaire de détermination de la vitesse de dépassement du véhicule dépassant, et la vitesse de basculement du mode feux de route au mode feux de croisement lorsqu'un véhicule dépassant est détecté dans la zone latérale arrière est adaptée à la vitesse de dépassement déterminée du véhicule dépassant.

Le basculement en mode de croisement est fait plus rapidement du côté où est détecté le véhicule dépassant.

Le au moins un organe fonctionnel comporte un dispositif d'essuie-glace du véhicule, le mode de route est un mode vitesse de balayage basse, et le mode de croisement un mode vitesse de balayage haute.

Il comporte une étape supplémentaire de détection de pluie au moyen d'un détecteur de pluie, et le passage du mode vitesse de balayage basse au mode vitesse de balayage haute est effectué uniquement si de la pluie est détectée.

La détection du véhicule dépassant dans la zone latérale arrière se fait au moyen d'un dispositif avertisseur de présence de véhicule dans la zone latérale arrière.

La détection du véhicule dépassant dans la zone latérale arrière se fait au moyen d'un dispositif de détection d'obstacle d'une aide au stationnement.

La détection du véhicule dépassant dans la zone latérale arrière se fait au moyen d'une caméra.

L'invention a aussi pour objet une unité fonctionnelle de véhicule automobile associée, contrôlant le basculement d'au moins un organe fonctionnel du véhicule d'un mode de route adapté à la circulation en l'absence de véhicule dépassant, à un mode de croisement, adapté à la présence d'un véhicule dépassant, l'unité étant reliée à des moyens de détection d'un véhicule dépassant dans une zone latérale arrière du véhicule, situé sur une zone latérale arrière, et configurée pour faire basculer le au moins un organe fonctionnel du véhicule du mode de fonctionnement de route au mode de fonctionnement de croisement lorsqu'un véhicule dépassant est détecté dans une zone latérale arrière,
l'unité étant configurée pour déclencher le basculement d'un dispositif de projecteurs du mode plein feux au mode feux de croisement de manière progressive lorsqu'un véhicule dépassant est détecté, l'unité étant configurée pour recevoir une estimation de la vitesse de dépassement du véhicule dépassant, l'unité étant caractérisée en ce qu'elle est est configurée pour adapter la vitesse de basculement du mode feux de route au mode feux de croisement lorsqu'un véhicule dépassant est détecté dans la zone latérale arrière à la vitesse de dépassement déterminée du véhicule dépassant.

L'unité fonctionnelle peut en outre avoir une ou plusieurs des caractéristiques suivantes, prises seules ou en combinaison.

Elle est configurée pour interroger un détecteur de pluie, et pour déclencher le basculement d'un dispositif d'essuie-glace vers le mode vitesse de balayage haute si de la pluie est détectée et un véhicule dépassant est détecté.

D'autres caractéristiques et avantages de l'invention apparaîtront à la lecture de la description détaillée des figures qui suit, parmi lesquelles :
- la figure 1 est une vue schématique d'un véhicule équipé d'un dispositif pour la mise en œuvre du procédé selon l'invention,
- les figure 2 et 3 montrent le déroulement du dépassement d'un véhicule équipé pour la mise en œuvre du procédé selon l'invention par un véhicule dépassant,
- la figure 4 montre les différentes étapes d'un mode de réalisation du procédé selon l'invention.

Sur toutes les figures les mêmes références se rapportent aux mêmes éléments.

L'invention concerne un procédé de contrôle d'au moins un organe fonctionnel d'un véhicule automobile notamment au moyen d'une unité fonctionnelle.

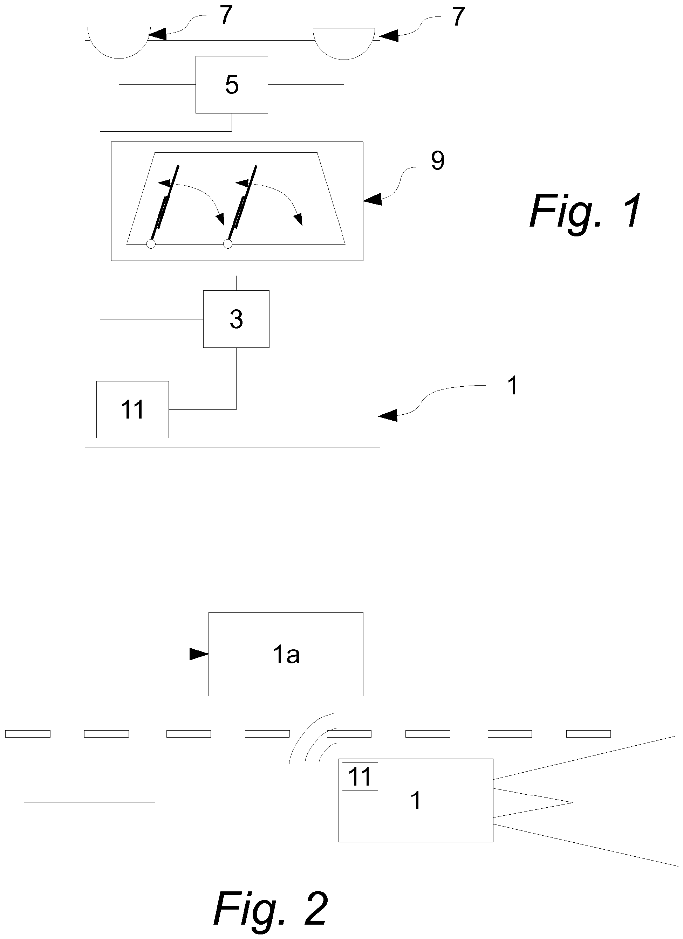

La figure 1 montre de façon schématique un véhicule 1, équipé d'une unité fonctionnelle 3. L'unité fonctionnelle 3 est reliée d'une part au dispositif de projecteurs 5, qui contrôle notamment les phares 7 du véhicule, et d'autre part au dispositif d'essuie-glace 9. Des variantes où l'unité de contrôle n'est relié qu'à l'un des deux sont aussi possibles.

L'unité fonctionnelle 3 est aussi reliée à des moyens de détection d'un véhicule dépassant, par exemple un détecteur de présence 11 orienté de manière à détecter la présence d'un véhicule, en particulier d'un véhicule dépassant le véhicule 1, dans une zone latérale arrière, comprenant en particulier l'angle mort du véhicule 1. L'angle mort du véhicule est usuellement déterminé par le jeu de miroirs de rétrovision du véhicule 1, et se trouve dans une position latérale arrière du véhicule 1. Dans le cadre d'un trafic à droite, l'angle mort à considérer en priorité est situé sur la gauche, dans le cadre d'un trafic à gauche, l'angle mort à considérer en priorité est situé sur la droite.

Dans le cas d'un véhicule ayant des miroirs supplémentaires couvrant ledit angle mort, la désignation peut s'appliquer à la zone latérale arrière correspondant, bien que celle-ci soit couverte en termes de rétrovision.

L'unité fonctionnelle 3 permet le basculement des organes fonctionnels 5, 9 entre différents modes de fonctionnement. En particulier, parmi ces modes de fonctionnement, un au moins est un mode de fonctionnement de route, et l'autre un mode de fonctionnement de croisement.

Le mode de fonctionnement de route est un mode de fonctionnement adapté à la conduite en l'absence de véhicule dépassant ou dans le voisinage immédiat du véhicule 1. Le mode de croisement au contraire, est suboptimal en l'absence d'autre véhicule, mais est préférable lors d'un croisement ou dépassement.

Le mode de fonctionnement de route correspond au mode feux de route dans le cas du dispositif de projecteurs 5. Les feux de route permettent un éclairage optimal, mais éblouissent les conducteurs situés devant le véhicule 1. Dans le cas du dispositif essuie-glace 9, le mode de route correspond au mode vitesse de balayage basse ou intermittente, adapté à une pluie d'intensité moyenne, mais insuffisant pour évacuer l'eau que soulève un véhicule dépassant.

Le mode de fonctionnement de croisement correspond au mode feux de croisement dans le cas du dispositif de projecteurs 5. Les feux de croisement ne permettent qu'un éclairage suboptimal, mais n'éblouissent pas les autres conducteurs, en particulier d'un véhicule dépassant. Dans le cadre du dispositif essuie-glace 9, le mode de croisement correspond au mode vitesse de balayage haute, qui permet d'évacuer l'importante quantité d'eau que soulève un véhicule dépassant.

Le détecteur de présence 11 peut comprendre le détecteur de présence d'un dispositif avertisseur de présence de véhicule dans l'angle mort (détecteur d'angle mort « blind spot detector ») tels qu'il en existe déjà. Il est alors possible de brancher l'unité de contrôle 3 sur la sortie du détecteur de présence, et d'utiliser le signal normalement destiné à activer un signal sonore ou un voyant, usuellement disposé au niveau du rétroviseur, pour déclencher le basculement du mode de fonctionnement de route au mode de fonctionnement de croisement.

Alternativement ou en parallèle, le détecteur de présence peut comprendre le détecteur d'un dispositif de détection d'obstacle d'une aide au stationnement tel qu'il en existe déjà. De même, le détecteur de présence 11 peut comprendre un radar ou lidar de recul, et l'unité fonctionnelle 3 et ledit radar ou lidar peuvent être configurés pour établir la vitesse de dépassement du véhicule dépassant. Enfin, le détecteur de présence 11 peut comprendre une caméra.

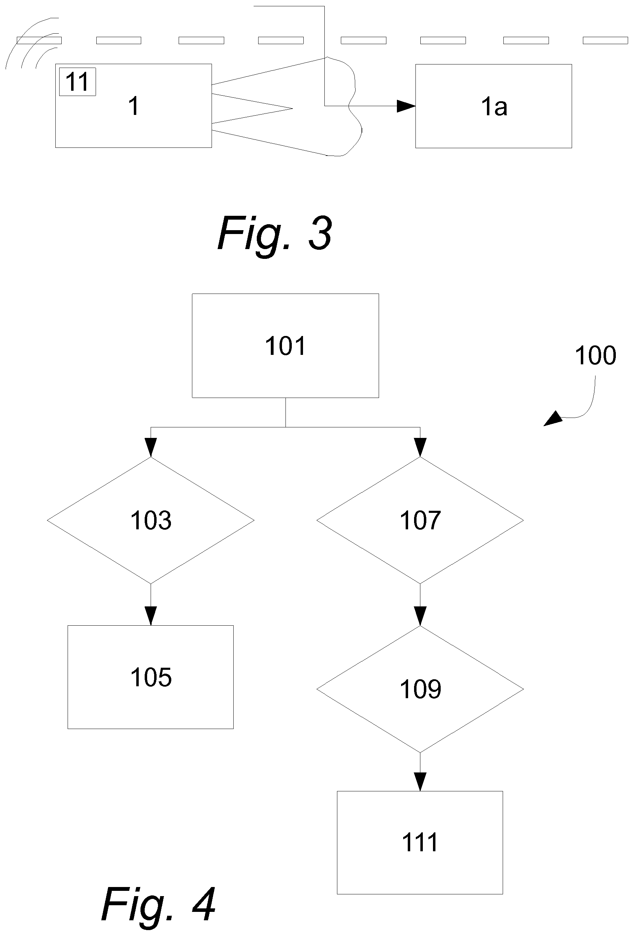

Les figures 2 et 3 montrent de manière schématique les étapes d'un dépassement du véhicule 1 par un second véhicule la, dit véhicule dépassant.

En figure 2, le véhicule dépassant la déboîte pour préparer le dépassement du véhicule 1, et se présente donc dans l'angle mort du véhicule 1. Le détecteur de présence 11 détecte alors ledit véhicule dépassant la, et émet un signal de détection.

L'unité fonctionnelle 3 reliée au détecteur de présence 11 reçoit le signal de détection. Sur réception dudit signal de détection, l'unité fonctionnelle 3 bascule du mode de route au mode de croisement. Le basculement au mode de croisement dans le cas des phares 7 peut se faire de plusieurs façons : en baissant la luminosité au moyen d'un contrôle de l'alimentation, en inclinant le faisceau vers le bas en inclinant les phares 7, ou en adaptant la forme du faisceau au moyen d'un cache.

En figure 3 le véhicule dépassant la s'est rabattu dans le faisceau maintenant atténué des phares en mode feux de croisement.

En détectant le véhicule dépassant la dans l'angle mort l'invention permet de mieux anticiper le dépassement, et la luminosité des phares 7 peut être baissée plus tôt dans le déroulement du dépassement. Dès lors, l'effet de « trou noir » n'est plus ressenti quand le véhicule dépassant la se rabat, moment le plus dangereux du dépassement.

Le basculement des phares 7 en mode de croisement est fait progressivement, éventuellement avec une vitesse de diminution de l'intensité déterminée au moyen de la vitesse de dépassement établie, de manière à éviter dans l'absolu le ressenti de « trou noir ». Une baisse de luminosité des phares 7 peut aussi se faire par paliers, par exemple pour le cas des phares 7 à diodes électroluminescentes DEL, la baisse de luminosité est faite par extinction successive de groupes de diodes.

Alternativement ou en parallèle, la baisse de luminosité, l'inclinaison du faisceau ou le changement de forme du faisceau peut être effectué de manière dissymétrique, par exemple en baissant plus rapidement la luminosité du phare 7 du côté où est détecté le véhicule dépassant la, et/ou en changeant l'orientation dudit phare vers le bas-côté.

De même, l'accélération de la vitesse de balayage du système essuie-glace 9 a lieu avant que le véhicule dépassant la ne soit trop avancé par rapport au véhicule 1, de sorte que la vitesse de balayage soit haute dès les premières projections d'eau soulevée par le véhicule dépassant la.

En outre, le fait que la lumière baisse et/ou que les essuie-glace accélèrent leur mouvement alerte le conducteur du véhicule 1 de la présence d'un véhicule dépassant la dans son angle mort.

La figure 4 est un schéma des étapes du procédé de contrôle 100 des organes fonctionnels 5, 9 du véhicule 1 par l'unité fonctionnelle 3.

La première étape 101 est la détection du véhicule dépassant la, au moyen du détecteur de présence 11. La détection peut, comme dit précédemment se faire au moyen d'un radar de recul, d'un dispositif de détection d'obstacle d'une aide au stationnement ou d'un dispositif avertisseur de présence de véhicule dans l'angle mort.

Suite à la détection 101, l'unité de contrôle 3 interroge le mode de fonctionnement du dispositif de projecteurs 5 du véhicule 1 à l'étape 103.

Si le dispositif de projecteurs 5 est en mode feux de route, l'unité fonctionnelle 3 déclenche le basculement en mode feux de croisement en 105. Pour piloter un basculement progressif en mode feux de croisement, l'unité de contrôle peut estimer la vitesse de dépassement, toujours à l'étape 105, pour adapter par exemple la vitesse de diminution de l'intensité lumineuse des phares 7.

En parallèle, l'unité fonctionnelle 3 interroge à l'étape 107 le détecteur de pluie du véhicule, suite à la détection du véhicule dépassant la à l'étape 101. Si le détecteur de pluie détecte de la pluie, l'unité fonctionnelle 3 continue en interrogeant le mode de fonctionnement du dispositif d'essuie-glace 9 à l'étape 109. Si le dispositif d'essuie-glace 9 n'est pas en mode de croisement, c'est-à-dire dans un autre mode que vitesse de balayage haute, l'unité fonctionnelle fait basculer ce dernier en mode vitesse de balayage haute à l'étape 111.

Le dispositif de contrôle et le procédé de contrôle 100 associé permettent d'améliorer la sécurité lors des dépassements. En déplaçant le ressenti de « trou noir » à un moment moins critique du dépassement, voire en le supprimant totalement, le risque d'accident de type collision entre véhicule dépassant la et dépassé 1 ou sortie de route du véhicule dépassé 1, est réduit.

De plus, le basculement automatique des organes fonctionnels 5, 9 au mode de fonctionnement de croisement alerte le conducteur de la présence d'un véhicule dépassant la dans l'angle mort.

Enfin, dans le cas des véhicules 1 équipés d'un radar de recul, d'un détecteur de présence dans l'angle mort, les capteurs déjà implémentés suffisent, et aucun détecteur 11 supplémentaire n'a à être installé.

## Revendications

1. Procédé de contrôle d'au moins un organe fonctionnel (5, 9) d'un véhicule automobile (1), le au moins un organe fonctionnel (5, 9) pouvant fonctionner selon un mode de route adapté à la circulation en l'absence de véhicule dépassant (la), et un mode de croisement, adapté à la présence d'un véhicule dépassant (la), le procédé comportant les étapes :
a. on détecte (101) un véhicule dépassant (1a) dans une zone latérale arrière,
b. on bascule (105, 111) du mode de fonctionnement de route au mode de fonctionnement de croisement lorsqu'un véhicule dépassant (1a) est détecté dans la zone latérale arrière,
le au moins un organe fonctionnel (5, 9) comportant un dispositif de projecteurs (5) du véhicule, le mode de route étant le mode feux de route, et le mode de croisement le mode feux de croisement, et le basculement du mode feux de route au mode feux de croisement lorsqu'un véhicule dépassant (1a) est détecté dans la zone latérale arrière étant fait de manière progressive, la zone latérale arrière comportant un angle mort du véhicule (1), Z **caractérisé en ce que** l'on bascule du mode de fonctionnement de route au mode de fonctionnement de croisement lorsque le véhicule dépassant (1a) se présente dans l'angle mort du véhicule (1).

2. Procédé selon la revendication 1, **caractérisé en ce qu'**il comporte une étape supplémentaire de détermination de la vitesse de dépassement du véhicule dépassant (1a), et **en ce que** la vitesse de basculement du mode feux de route au mode feux de croisement lorsqu'un véhicule dépassant (1a) est détecté dans la zone latérale arrière est adaptée à la vitesse de dépassement déterminée du véhicule dépassant (1a).

3. Procédé selon l'une des revendications précédentes, **caractérisé en ce que** le basculement en mode de croisement est fait plus rapidement du côté où est détecté le véhicule dépassant (1a).

4. Procédé selon l'une des revendications précédentes, **caractérisé en ce que** le au moins un organe fonctionnel (5, 9) comporte un dispositif d'essuie-glace (9) du véhicule (1), et **en ce que** le mode de route est un mode vitesse de balayage basse, et le mode de croisement un mode vitesse de balayage haute.

5. Procédé selon la revendication 4, **caractérisé en ce qu'**il comporte une étape supplémentaire de détection de pluie au moyen d'un détecteur de pluie, et **en ce que** le passage du mode vitesse de balayage basse au mode vitesse de balayage haute est effectué uniquement si de la pluie est détectée.

6. Procédé selon l'une des revendications précédentes, **caractérisé en ce que** la détection du véhicule dépassant (1a) dans la zone latérale arrière se fait au moyen d'un dispositif avertisseur de présence (11) de véhicule dans la zone latérale arrière.

7. Procédé selon l'une des revendications précédentes, **caractérisé en ce que** la détection du véhicule dépassant (1a) dans la zone latérale arrière se fait au moyen d'un dispositif de détection d'obstacle d'une aide au stationnement.

8. Procédé selon l'une au moins des revendications précédentes, **caractérisé en ce que** la détection du véhicule dépassant (1a) dans la zone latérale arrière se fait au moyen d'une caméra.

9. Unité fonctionnelle de véhicule automobile (1) contrôlant le basculement d'au moins un organe fonctionnel (5, 9) du véhicule d'un mode de route adapté à la circulation en l'absence de véhicule dépassant (la), à un mode de croisement, adapté à la présence d'un véhicule dépassant (la), l'unité étant reliée à des moyens de détection (11) d'un véhicule dépassant (1a) dans une zone latérale arrière du véhicule, situé sur une zone latérale arrière, et configurée pour faire basculer le au moins un organe fonctionnel (5, 9) du véhicule (1) du mode de fonctionnement de route au mode de fonctionnement de croisement lorsqu'un véhicule dépassant (1a) est détecté dans une zone latérale arrière, l'unité étant configurée pour déclencher le basculement d'un dispositif de projecteurs (5) du mode plein feux au mode feux de croisement de manière progressive lorsqu'un véhicule dépassant (1a) est détecté étant configurée pour recevoir une estimation de la vitesse de dépassement du véhicule dépassant (la),
l'unité étant **caractérisée en ce qu'**elle est configurée pour adapter la vitesse de basculement du mode feux de route au mode feux de croisement lorsqu'un véhicule dépassant (1a) est détecté dans la zone latérale arrière à la vitesse de dépassement déterminée du véhicule dépassant (la)..

10. Unité fonctionnelle selon la revendication 9, **caractérisée en ce qu'**elle est configurée pour interroger un détecteur de pluie, et pour déclencher le basculement d'un dispositif d'essuie-glace (9) vers le mode vitesse de balayage haute si de la pluie est détectée et un véhicule dépassant (1a) est détecté.

## Patentansprüche

1. Verfahren zur Steuerung wenigstens eines Funktionsteils (5, 9) eines Kraftfahrzeugs (1), wobei das wenigstens eine Funktionsteil (5, 9) in einem Straßenfahrmodus, der für die Fahrt bei Nichtvorhandensein eines überholenden Fahrzeugs (1a) geeignet ist, und einem Kreuzungsmodus, der für das Vorhandensein eines überholenden Fahrzeugs (1a) geeignet ist, arbeiten kann, wobei das Verfahren die Schritte umfasst:
a. Es wird ein überholendes Fahrzeug (1a) in einem hinteren seitlichen Bereich erkannt (101),
b. es wird vom Straßenfahr-Betriebsmodus in den Kreuzungs-Betriebsmodus umgeschaltet (105, 111), wenn ein überholendes Fahrzeug (1a) im hinteren seitlichen Bereich erkannt wird,
wobei das wenigstens eine Funktionsteil (5, 9) eine Scheinwerfervorrichtung (5) des Fahrzeugs umfasst, wobei der Straßenfahrmodus der Fernlichtmodus und der Kreuzungsmodus der Abblendlichtmodus ist und wobei das Umschalten vom Fernlichtmodus in den Abblendlichtmodus, wenn ein überholendes Fahrzeug (1a) im hinteren seitlichen Bereich erkannt wird, allmählich erfolgt, wobei der hintere seitliche Bereich einen toten Winkel des Fahrzeugs (1) umfasst,
**dadurch gekennzeichnet, dass** vom Straßenfahr-Betriebsmodus in den Kreuzungs-Betriebsmodus umgeschaltet wird, wenn das überholende Fahrzeug (1a) im toten Winkel des Fahrzeugs (1) erscheint.

2. Verfahren nach Anspruch 1, **dadurch gekennzeichnet, dass** es einen zusätzlichen Schritt der Bestimmung der Überholgeschwindigkeit des überholenden Fahrzeugs (1a) umfasst, und dadurch, dass die Geschwindigkeit des Umschaltens vom Fernlichtmodus in den Abblendlichtmodus, wenn ein überholendes Fahrzeug (1a) im hinteren seitlichen Bereich erkannt wird, an die bestimmte Überholgeschwindigkeit des überholenden Fahrzeugs (1a) angepasst wird.

3. Verfahren nach einem der vorhergehenden Ansprüche, **dadurch gekennzeichnet, dass** das Umschalten in den Kreuzungsmodus schneller auf der Seite erfolgt, wo das überholende Fahrzeug (1a) erkannt wird.

4. Verfahren nach einem der vorhergehenden Ansprüche, **dadurch gekennzeichnet, dass** das wenigstens eine Funktionsteil (5, 9) eine Scheibenwischvorrichtung (9) des Fahrzeugs (1) umfasst, und dadurch, dass der Straßenfahrmodus ein Modus niedriger Wischgeschwindigkeit und der Kreuzungsmodus ein Modus hoher Wischgeschwindigkeit ist.

5. Verfahren nach Anspruch 4, **dadurch gekennzeichnet, dass** es zusätzlichen Schritt der Erkennung von Regen mittels eines Regensensors umfasst, und dadurch, dass der Wechsel vom Modus niedriger Wischgeschwindigkeit zum Modus hoher Wischgeschwindigkeit nur durchgeführt wird, falls Regen erkannt wird.

6. Verfahren nach einem der vorhergehenden Ansprüche, **dadurch gekennzeichnet, dass** die Erkennung des überholenden Fahrzeugs (1a) im hinteren seitlichen Bereich mittels einer Warnvorrichtung für die Präsenz (11) eines Fahrzeugs im hinteren seitlichen Bereich erfolgt.

7. Verfahren nach einem der vorhergehenden Ansprüche, **dadurch gekennzeichnet, dass** die Erkennung des überholenden Fahrzeugs (1a) im hinteren seitlichen Bereich mittels einer Hinderniserkennungsvorrichtung einer Einparkhilfe erfolgt.

8. Verfahren nach einem der vorhergehenden Ansprüche, **dadurch gekennzeichnet, dass** die Erkennung des überholenden Fahrzeugs (1a) im hinteren seitlichen Bereich mittels einer Kamera erfolgt.

9. Funktionseinheit eines Kraftfahrzeugs (1), welche das Umschalten wenigstens eines Funktionsteils (5, 9) des Fahrzeugs von einem Straßenfahrmodus, der für die Fahrt bei Nichtvorhandensein eines überholenden Fahrzeugs (1a) geeignet ist, in einen Kreuzungsmodus, der für das Vorhandensein eines überholenden Fahrzeugs (1a) geeignet ist, steuert, wobei die Einheit mit Mitteln zur Erkennung (11) eines überholenden Fahrzeugs (1a) in einem hinteren seitlichen Bereich des Fahrzeugs verbunden ist, die sich in einem hinteren seitlichen Bereich befinden, und dafür ausgelegt ist zu bewirken, dass das wenigstens eine Funktionsteil (5, 9) des Fahrzeugs (1) vom Straßenfahr-Betriebsmodus in den Kreuzungs-Betriebsmodus umschaltet, wenn ein überholendes Fahrzeug (1a) in einem hinteren seitlichen Bereich erkannt wird,
wobei die Einheit dafür ausgelegt ist, das allmählich erfolgende Umschalten einer Scheinwerfervorrichtung (5) vom Fernlichtmodus in den Abblendlichtmodus auszulösen, wenn ein überholendes Fahrzeug (1a) erkannt wird, wobei die Einheit dafür ausgelegt ist, eine Schätzung der Überholgeschwindigkeit des überholenden Fahrzeugs (1a) zu empfangen,
wobei die Einheit **dadurch gekennzeichnet ist, dass** sie dafür ausgelegt ist, die Geschwindigkeit des Umschaltens vom Fernlichtmodus in den Abblendlichtmodus, wenn ein überholendes Fahrzeug (1a) im hinteren seitlichen Bereich erkannt wird, an die bestimmte Überholgeschwindigkeit des überholenden Fahrzeugs (1a) anzupassen.

10. Funktionseinheit nach Anspruch 9, **dadurch gekennzeichnet, dass** sie dafür ausgelegt ist, einen Regensensor abzufragen und das Umschalten einer Scheibenwischvorrichtung (9) in den Modus hoher Wischgeschwindigkeit auszulösen, falls Regen erkannt wird und ein überholendes Fahrzeug (1a) erkannt wird.

## Claims

1. Method for controlling at least one functional component (5, 9) of a motor vehicle (1), the at least one functional component (5, 9) being able to operate in a high-beam driving mode designed for travel in the absence of an overtaking vehicle (1a) and a low-beam driving mode designed for the presence of an overtaking vehicle (1a), the method comprising the steps of:
a. detecting (101) an overtaking vehicle (1a) in a rear lateral region,
b. switching (105, 111) from the high-beam driving operating mode to the low-beam driving operating mode when an overtaking vehicle (1a) is detected in the rear lateral region,
the at least one functional component (5, 9) comprising a headlight device (5) of the vehicle, the high-beam driving mode being the high-beam mode, and the low-beam driving mode being the low-beam mode, and the switch from the high-beam mode to the low-beam mode when an overtaking vehicle (1a) is detected in the rear lateral region being performed gradually, the rear lateral region comprising a blind spot of the vehicle (1), **characterized in that** there is a switch from the high-beam driving operating mode to the low-beam driving operating mode when the overtaking vehicle (1a) is in the blind spot of the vehicle (1).

2. Method according to Claim 1, **characterized in that** it comprises an additional step of determining the overtaking speed of the overtaking vehicle (1a),and **in that** the switching speed from the high-beam mode to the low-beam mode when an overtaking vehicle (1a) is detected in the rear lateral region is tailored to the determined overtaking speed of the overtaking vehicle (1a).

3. Method according to either of the preceding claims, **characterized in that** the switch to low-beam driving mode is performed more quickly from the side where the overtaking vehicle (1a) is detected.

4. Method according to one of the preceding claims, **characterized in that** the at least one functional component (5, 9) comprises a windscreen wiper device (9) of the vehicle (1), and **in that** the high-beam driving mode is a low wiping speed mode, and the low-beam driving mode is a high wiping speed mode.

5. Method according to Claim 4, **characterized in that** it comprises an additional step of detecting rain by way of a rain sensor, and **in that** the change from the low wiping speed mode to the high wiping speed mode is performed only if rain is detected.

6. Method according to one of the preceding claims, **characterized in that** the detection of the overtaking vehicle (1a) in the rear lateral region is performed by way of a presence warning device (11) for warning of the presence of a vehicle in the rear lateral region.

7. Method according to one of the preceding claims, **characterized in that** the detection of the overtaking vehicle (1a) in the rear lateral region is performed by way of an obstacle detection device of a parking aid.

8. Method according to one of the preceding claims, **characterized in that** the detection of the overtaking vehicle (1a) in the rear lateral region is performed by way of a camera.

9. Functional unit for a motor vehicle (1) controlling the switching of at least one functional component (5, 9) of the vehicle from a high-beam driving mode designed for travel in the absence of an overtaking vehicle (1a) to a low-beam driving mode designed for the presence of an overtaking vehicle (1a), the unit being connected to detection means (11) for detecting an overtaking vehicle (1a) in a rear lateral region of the vehicle, located on a rear lateral region, and configured so as to switch the at least one functional component (5, 9) of the vehicle (1) from the high-beam driving operating mode to the low-beam driving operating mode when an overtaking vehicle (1a) is detected in the rear lateral region,
the unit being configured so as to trigger the switching of a headlight device (5) from full-beam mode to low-beam mode gradually when an overtaking vehicle (1a) is detected, the unit being configured so as to receive an estimate of the overtaking speed of the overtaking vehicle (1a), the unit being **characterized in that** it is configured so as to tailor the switching speed from the high-beam mode to the low-beam mode when an overtaking vehicle (1a) is detected in the rear lateral region to the determined overtaking speed of the overtaking vehicle (1a) .

10. Functional unit according to Claim 9, **characterized in that** it is configured so as to interrogate a rain sensor, and so as to trigger the switching of a windscreen wiper device (9) to the high wiping speed mode if rain is detected and an overtaking vehicle (1a) is detected.
